# EUROPÄISCHE PATENTSCHRIFT

(11) **EP 2 694 239 B1**
(45) Veröffentlichungstag und Bekanntmachung des Hinweises auf die Patenterteilung: **07.02.2018**
(21) Anmeldenummer: 12714657.9
(22) Anmeldetag: 05.04.2012
(51) Int. Cl.: B23F 5/22, B23F 17/00, B23F 19/10

(54) **VERFAHREN ZUR HERSTELLUNG VON VERZAHNUNGEN AN WERKSTÜCKEN**
METHOD FOR PRODUCING TOOTHINGS ON WORKPIECES
PROCÉDÉ DE FABRICATION DE DENTURES SUR DES PIÈCES

(30) Priorität: 07.04.2011 DE 102011006993
(43) Veröffentlichungstag der Anmeldung: 12.02.2014
(73) Patentinhaber: MAG IAS GmbH, 73054 Eislingen (DE)
(72) Erfinder: FLEISCHER, Holger, 09573 Augustusburg (DE); WIESEL, Mario, 99195 Schwansee (DE)
(74) Vertreter: Rau, Schneck & Hübner Patentanwälte Rechtsanwälte PartGmbB
(86) Internationale Anmeldenummer: PCT/EP2012/056295
(87) Internationale Veröffentlichungsnummer: WO 2012/136774

(56) Entgegenhaltungen:
- EP-A2- 0 832 716
- CH-A- 395 699
- JP-A- 59 182 020
- US-A- 2 451 447

## Beschreibung

Die Erfindung betrifft ein Verfahren zur Herstellung von Verzahnungen an Werkstücken gemäß dem Oberbegriff des Anspruchs 1.

Aus der DE 10 2006 044 738 B3 (entspricht US 7,624,505 B2) ist ein Verfahren zur Verzahnungsbearbeitung von Werkstücken bekannt. Das Verfahren wird auf einer Werkzeugmaschine durchgeführt, die einen um eine Hauptachse verschwenkbaren Drehhalter mit zwei Werkstückspindeln aufweist. Die Werkstückspindeln können durch Drehung des Drehhalters um die Hauptachse in eine Bearbeitungsposition und eine Transferposition verschwenkt werden. In der Bearbeitungsposition wird zunächst aus einem Rohteil durch Vorfräsen ein Halbfertigteil hergestellt. Durch Entgrat-Werkzeuge werden beim Vorfräsen entstandene axiale Grob-Grate an beiden Stirnseiten entfernt. Anschließend wird das Halbfertigteil in die Transferposition überführt, wo mittels Anfas-Werkzeugen ein Anfasen des Halbfertigteils an beiden Stirnseiten des Werkstücks erfolgt. Durch weitere Entgrat-Werkzeuge werden beim Anfasen entstandene axiale Fein-Grate entfernt, so dass ein axial entgratetes und angefastes Halbfertigteil entsteht. Daraufhin wird das angefaste Halbfertigteil wieder in die Bearbeitungsposition überführt, wo durch Feinfräsen beim Anfasen entstandene radiale Fein-Grate entfernt werden und so das Fertigteil, also das verzahnte und vollständig entgratete Werkstück hergestellt wird. Anschließend wird das Fertigteil erneut in die Transferposition überführt und durch ein neues zu bearbeitendes Rohteil ersetzt. Das axiale Entgraten und Anfasen erfolgt jeweils mittels zwei Entgrat-Werkzeugen bzw. Anfas-Werkzeugen, die das zu verzahnende Werkstück im Bereich beider Stirnseiten gleichzeitig bearbeiten. Weiterhin können durch die zwei Werkstückspindeln zwei Werkstücke parallel bearbeitet werden, wodurch schnell und kostengünstig verzahnte und vollständig entgratete Werkstücke gefertigt werden können. Nachteilig ist, dass der zur Durchführung dieses Verfahrens erforderliche maschinentechnische Aufwand hoch ist.
Aus der EP 0 832 716 A2 ist eine Werkzeugmaschine zum Drehen und Wälzfräsen von mechanischen Teilen bekannt. Die Werkzeugmaschine weist eine Hauptspindel auf, in der ein zur Bearbeitung vorgesehenes mechanisches Teil angeordnet ist. An einem ersten Schlitten ist ein Revolverkopf mit verschiedenen Werkzeugen angeordnet, wohingegen an einem zweiten Schlitten ein Wälzfräser angeordnet ist. Die Schlitten können gleichzeitig verfahren werden, um den Wälzfräser zusammen mit einem weiteren Werkzeug einzusetzen, um beispielsweise ein Entgraten der Stellen durchzuführen, welche der Wälzfräser bearbeitet hat.
Der Erfindung liegt die Aufgabe zugrunde, ein Verfahren zu schaffen, das eine einfache und schnelle Herstellung von Verzahnungen an Werkstücken mit einem geringen maschinentechnischen Aufwand ermöglicht.
Diese Aufgabe wird durch ein Verfahren mit den Merkmalen des Anspruchs 1 gelöst. Erfindungsgemäß wurde erkannt, dass die Herstellung von verzahnten Werkstücken mit einer hohen Produktivität und einem vergleichsweise geringen maschinentechnischen Aufwand möglich ist, wenn unmittelbar nach dem Erzeugen der Verzahnung im Bereich der ersten Stirnseite mit dem Nachbearbeiten der erzeugten Verzahnung begonnen wird, so dass das Nachbearbeiten der erzeugten Verzahnung im Bereich der ersten Stirnseite zeitparallel bzw. zeitgleich zum weiteren Erzeugen der Verzahnung stattfindet. Hierzu ist es erforderlich, das die erzeugte Verzahnung im Bereich der ersten Stirnseite und im Bereich der zweiten Stirnseite mittels der entsprechenden Werkzeuge unabhängig voneinander, also zeitlich versetzt zueinander bearbeitbar ist. Nach dem Erzeugen der Verzahnung im Bereich der ersten Stirnseite werden also zeitparallel zum weiteren Erzeugen der Verzahnung beim Verzahnen entstandene radiale Grate im Bereich der ersten Stirnseite bzw. im Bereich der bereits erzeugten Verzahnung und axiale Grate an der ersten Stirnseite entfernt. Das Nachbearbeiten der Verzahnung im Bereich der ersten Stirnseite ist zumindest zeitgleich mit dem Erzeugen der Verzahnung im Bereich der zweiten Stirnseite abgeschlossen, so dass das mindestens eine zweite Werkzeug unmittelbar mit dem Nachbearbeiten der Verzahnung im Bereich der zweiten Stirnseite fortfahren kann. Beim Nachbearbeiten der Verzahnung an der Umfangsseite werden insbesondere radiale Grate an den Zahnspitzen und Zahnflanken entfernt. Das Nachbearbeiten erfolgt mit einem Anfas-Werkzeug und einem Entgrat-Werkzeug, wie beispielsweise einer Bürste, einer Schleifscheibe oder einem Fräser. Erforderlichenfalls kann nach dem Nachbearbeiten noch ein Fertigbearbeiten der erzeugten Verzahnung erfolgen, bei dem axiale und/oder radiale Fein-Grate bzw. Sekundär-Grate entfernt werden.

Das Nachbearbeiten ermöglicht auf einfache und schnelle Weise das Erzeugen einer angefasten und axial entgrateten Verzahnung im Bereich der ersten Stirnseite. Die bei der Verzahnungserzeugung und beim Anfasen entstandenen axialen Grate werden zeitgleich zu dem Anfasen mittels des Entgrat-Werkzeuges entfernt. Beim Anfasen entstandene radiale Fein- bzw. Sekundär-Grate können bei einer nachfolgenden Fertigbearbeitung entfernt werden. Das zumindest teilweise zeitgleiche Anfasen und Entfernen von axialen Graten ermöglicht eine geringe Zykluszeit bei der Herstellung von Werkstücken mit angefaster Verzahnung.

Ein Verfahren nach Anspruch 2 gewährleistet das Entfernen von radialen Graten im Bereich der ersten Stirnseite zeitparallel zu dem weiteren Erzeugen der Verzahnung. Dadurch, dass die radialen Grate im Bereich der ersten Stirnseite zeitlich unabhängig, also zeitlich beabstandet von den radialen Graten im Bereich der zweiten Stirnseite entfernbar sind, ist ein zur Verzahnungserzeugung zeitparalleles Entfernen der radialen Grate möglich. Hierdurch werden geringe Zykluszeiten bei der Verzahnung erzielt. Das Entfernen der radialen Grate kann beispielsweise durch Anfasen erfolgen.

Ein Verfahren nach Anspruch 3 gewährleistet ein Entfernen der axialen Grate an der ersten Stirnseite zeitparallel zum weiteren Erzeugen der Verzahnung. Dadurch, dass die axialen Grate an der ersten Stirnseite zeitlich unabhängig, also zeitlich beabstandet zu den axialen Graten an der zweiten Stirnseite entfernbar sind, ist ein zur Verzahnungserzeugung zeitparalleles Entfernen der axialen Grate möglich. Hierdurch werden geringe Zykluszeiten beim Verzahnen von Werkstücken erzielt.

Ein Verfahren nach Anspruch 4 ermöglicht auf einfache und schnelle Weise das Erzeugen einer angefasten und axial entgrateten Verzahnung im Bereich der zweiten Stirnseite ohne axiale Grate. Die bei der Verzahnungserzeugung und beim Anfasen entstandenen axialen Grate werden vorzugsweise zeitgleich zu dem Anfasen mittels des Entgrat-Werkzeuges entfernt. Beim Anfasen entstandene radiale Fein- bzw. Sekundär-Grate können bei einer nachfolgenden Fertigbearbeitung entfernt werden.

Ein Verfahren nach Anspruch 5 ermöglicht eine geringe Zykluszeit bei der Herstellung von Werkstücken mit angefaster Verzahnung.

Ein Verfahren nach Anspruch 6 ermöglicht die Herstellung von Werkstücken mit einer qualitativ hochwertigen Verzahnung ohne jegliche Grate. Ein Fertigbearbeiten ist insbesondere dann erforderlich, wenn beim Anfasen radiale Fein- bzw. Sekundär-Grate entstanden sind. Vorzugsweise erfolgt das Fertigbearbeiten mittels des ersten Werkzeuges, das bereits zum Erzeugen der Verzahnung eingesetzt wurde. Das Fertigbearbeiten erfolgt beispielsweise in gleicher Richtung wie die Verzahnungserzeugung, also ausgehend von der ersten Stirnseite bis zu der zweiten Stirnseite. Alternativ kann das Fertigbearbeiten in entgegengesetzter Richtung zu der Verzahnungserzeugung erfolgen, also ausgehend von der zweiten Stirnseite bis zu der ersten Stirnseite.

Ein Verfahren nach Anspruch 7 ermöglicht ein einfaches und schnelles Fertigbearbeiten der erzeugten Verzahnung. Dadurch, dass das Fertigbearbeiten zumindest teilweise zeitparallel bzw. zeitgleich mit dem Nachbearbeiten der im Bereich der zweiten Stirnseite erzeugten Verzahnung erfolgt, wird eine geringe Zykluszeit bei der Herstellung der Verzahnung erzielt. Vorzugsweise erfolgt das Fertigbearbeiten mittels des ersten Werkzeuges.

Ein Verfahren nach Anspruch 8 ermöglicht auf einfache und schnelle Weise das Entfernen von durch das Anfasen entstandenen radialen Fein-Graten.

Ein Verfahren nach Anspruch 9 ermöglicht auf einfache Weise das Erzeugen und Fertigbearbeiten der Verzahnung.

Ein Verfahren nach Anspruch 10 ermöglicht auf einfache Weise ein unabhängiges Entfernen von axialen Graten an beiden Stirnseiten. Dadurch, dass genau ein Entgrat-Werkzeug vorgesehen ist, das um eine zugehörige Schwenkachse um 180° verschwenkbar ist, kann erst die eine Stirnseite und nach Verschwenken des Entgrat-Werkzeuges um 180° die andere Stirnseite entgratet werden.

Ein Verfahren nach Anspruch 11 ermöglicht auf einfache Weise ein unabhängiges Anfasen der erzeugten Verzahnung im Bereich beider Stirnseiten. Dadurch, dass genau ein Anfas-Werkzeug vorgesehen ist, das um eine zugehörige Schwenkachse um 180° verschwenkbar ist, kann erst die Verzahnung im Bereich der einen Stirnseite und nach dem Verschwenken des Anfas-Werkzeuges um 180° im Bereich der anderen Stirnseite angefast werden.

Ein Verfahren nach Anspruch 12 ermöglicht auf einfache Weise das unabhängige Entfernen von axialen Graten an beiden Stirnseiten. Dadurch, dass zwei Entgrat-Werkzeuge an einem gemeinsamen Werkzeugträger angeordnet sind und deren axialer Abstand größer als der axiale Abstand der Stirnseiten ist, wird immer nur eine Stirnseite entgratet. Zum Entgraten der jeweils anderen Stirnseite muss der Werkzeugträger zusammen mit den Entgrat-Werkzeugen axial verfahren werden.

Ein Verfahren nach Anspruch 13 ermöglicht das unabhängige Anfasen der erzeugten Verzahnung im Bereich beider Stirnseiten. Dadurch, dass zwei Anfas-Werkzeuge an einem gemeinsamen Werkzeugträger angeordnet sind und deren axialer Abstand größer als der axiale Abstand der Stirnseiten ist, wird die Verzahnung immer nur im Bereich einer der Stirnseiten angefast. Zum Anfasen der Verzahnung im Bereich der jeweils anderen Stirnseite muss der Werkzeugträger zusammen mit den Anfas-Werkzeugen axial verfahren werden.

Weitere Merkmale, Vorteile und Einzelheiten der Erfindung ergeben sich aus der nachfolgenden Beschreibung mehrerer Ausführungsbeispiele. Es zeigen:
- Fig. 1: eine perspektivische Ansicht einer Werkzeugmaschine zur Herstellung von Verzahnungen an Werkstücken gemäß einem ersten Ausführungsbeispiel,
- Fig. 2: eine Draufsicht auf ein mittels der Werkzeugmaschine in Fig. 1 zu verzahnendes Werkstück zu Beginn der Herstellung einer Verzahnung,
- Fig. 3: eine Schnittdarstellung entlang der Schnittlinie III-III in Fig. 2,
- Fig. 4: eine Draufsicht auf das Werkstück zu Beginn des Anfasens der Verzahnung im Bereich einer ersten Stirnseite des Werkstücks,
- Fig. 5: eine Schnittdarstellung entlang der Schnittlinie V-V in Fig. 4,
- Fig. 6: eine Schnittdarstellung entlang der Schnittlinie VI-VI in Fig. 4,
- Fig. 7: eine Draufsicht auf das Werkstück zu Beginn des Anfasens der Verzahnung im Bereich einer zweiten Stirnseite des Werkstücks,
- Fig. 8: eine Schnittdarstellung entlang der Schnittlinie VIII-VIII in Fig. 7,
- Fig. 9: eine Schnittdarstellung entlang der Schnittlinie IX-IX in Fig. 7,
- Fig. 10: eine Draufsicht auf das Werkstück beim Fertigbearbeiten,
- Fig. 11: eine Schnittdarstellung entlang der Schnittlinie XI-XI in Fig. 10,
- Fig. 12: eine Schnittdarstellung entlang der Schnittlinie XII-XII in Fig. 10,
- Fig. 13: eine Schnittdarstellung entsprechend Fig. 5 gemäß einem zweiten Ausführungsbeispiel,
- Fig. 14: eine Schnittdarstellung entsprechend Fig. 6 gemäß einem zweiten Ausführungsbeispiel,
- Fig. 15: eine Schnittdarstellung entsprechend Fig. 11 gemäß einem zweiten Ausführungsbeispiel,
- Fig. 16: eine Schnittdarstellung entsprechend Fig. 12 gemäß einem zweiten Ausführungsbeispiel,
- Fig. 17: eine Draufsicht auf ein mittels einer Werkzeugmaschine gemäß einem dritten Ausführungsbeispiel zu verzahnendes Werkstück beim Erzeugen der Verzahnung im Bereich der ersten Stirnseite des Werkstücks,
- Fig. 18: eine Schnittdarstellung entlang der Schnittlinie XVIII-XVIII in Fig. 17,
- Fig. 19: eine Draufsicht auf das Werkstück beim Fertigbearbeiten, und
- Fig. 20: eine Schnittdarstellung entlang der Schnittlinie XX-XX in Fig. 19.

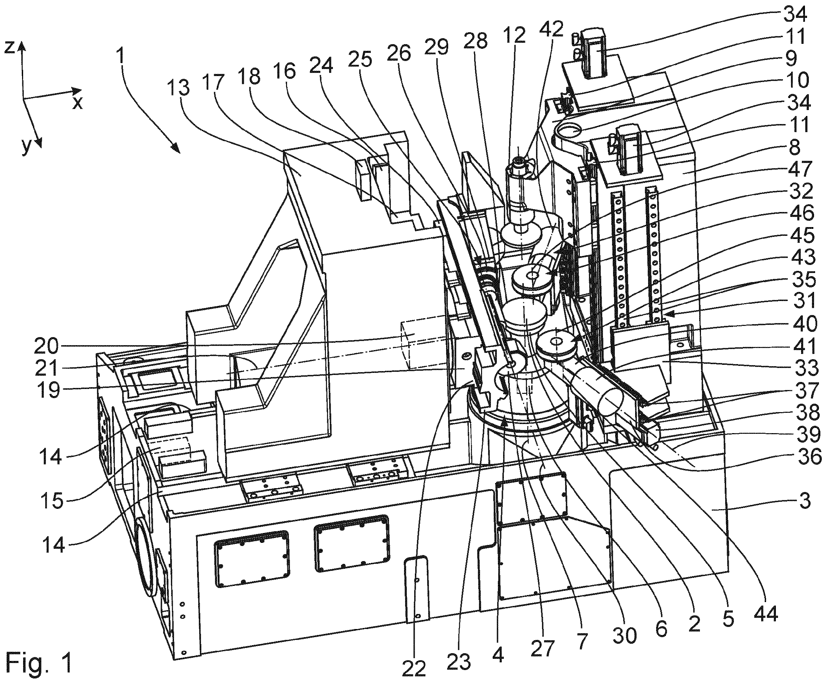

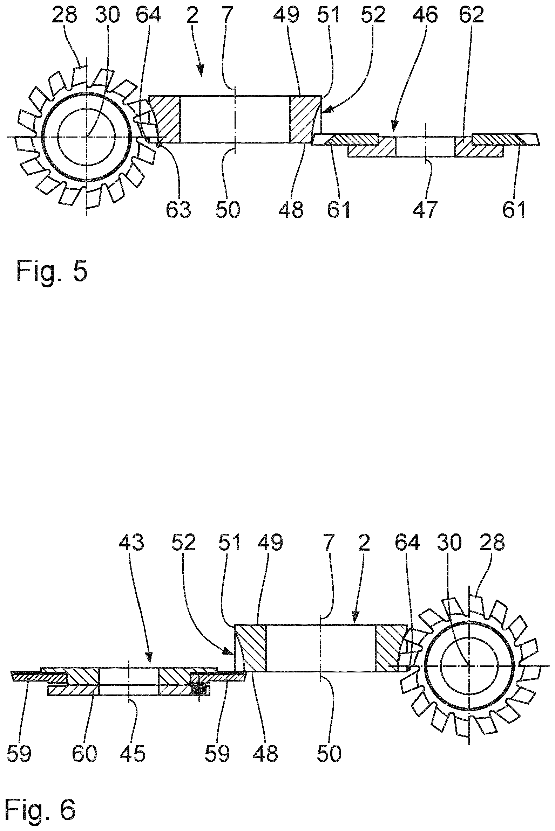

Nachfolgend wird unter Bezugnahme auf die Figuren 1 bis 12 ein erstes Ausführungsbeispiel der Erfindung beschrieben. Eine Werkzeugmaschine 1 zur Herstellung von Verzahnungen an Werkstücken 2 weist ein Maschinenbett 3 auf, an dem stehend eine Werkstückspindel 4 angeordnet ist. Die Werkstückspindel 4 weist eine Werkstückaufnahme 5 auf, die mittels eines Antriebsmotors 6 um eine vertikal verlaufende Drehachse 7 drehantreibbar ist. Die Drehachse 7 verläuft parallel zu einer vertikalen z-Richtung und wird auch als C-Achse bezeichnet.

In einer horizontalen x-Richtung seitlich neben der Werkstückspindel 4 ist ein erster Ständer 8 fest an dem Maschinenbett 3 angeordnet. An einer der Werkstückspindel 4 zugewandten Frontseite des Ständers 8 ist ein erster z-Schlitten 9 angeordnet, der mittels eines ersten z-Antriebsmotors 10 auf ersten z-Führungsschienen 11 parallel zu der z-Richtung linear verfahrbar ist. An dem z-Schlitten 9 ist eine Gegen-Werkstückaufnahme 12 konzentrisch zu der Drehachse 7 angeordnet. Die Gegen-Werkstückaufnahme 12 ist um die Drehachse 7 drehbar gelagert und dient zur Aufnahme von wellenförmigen Werkstücken 2.

Gegenüberliegend zu dem Ständer 8 ist ein zweiter Ständer 13 linear verfahrbar an dem Maschinenbett 3 angeordnet. Hierzu sind auf dem Maschinenbett 3 x-Führungsschienen 14 befestigt, auf denen der Ständer 13 mittels eines x-Antriebsmotors 15 in der x-Richtung linear verfahrbar ist. An einer der Werkstückspindel 4 zugewandten Frontseite des Ständers 13 sind zweite z-Führungsschienen 16 angeordnet, auf denen ein zweiter z-Schlitten 17 mittels eines zweiten z-Antriebsmotors 18 parallel zu der z-Richtung linear verfahrbar ist.

An dem z-Schlitten 17 ist ein Drehteil 19 angeordnet, das mittels eines Antriebsmotors 20 um eine parallel zu der x-Richtung verlaufende Drehachse 21 verschwenkbar ist. Die Drehachse 21 wird auch als A-Achse bezeichnet. An dem Drehteil 19 sind y-Führungsschienen 22 angeordnet, auf denen ein y-Schlitten 23 mittels eines y-Antriebsmotors 24 linear verfahrbar ist. Bei waagerechter Ausrichtung des Drehteils 19 verlaufen die y-Führungsschienen 22 parallel zu einer horizontalen y-Richtung, so dass der y-Schlitten 23 parallel zu dieser y-Richtung linear verfahrbar ist. Die x-, y- und z-Richtung verlaufen jeweils senkrecht zueinander und bilden ein kartesisches Koordinatensystem.

An dem y-Schlitten 23 ist eine erste Bearbeitungseinheit 25 zur Bearbeitung eines Werkstücks 2 angeordnet, die als Fräseinheit ausgebildet ist. Die Bearbeitungseinheit 25 weist eine Werkzeugaufnahme 26 und eine gegenüberliegend angeordnete Gegen-Werkzeugaufnahme 27 zum Aufnehmen eines als Fräs-Werkzeug bzw. Wälzfräser ausgebildeten ersten Werkzeuges 28 auf. Die Werkzeugaufnahme 26 ist mittels eines Antriebsmotors 29 um eine parallel zu den y-Führungsschienen 22 verlaufende Drehachse 30 drehantreibbar. Die Drehachse 30 wird auch als B-Achse bezeichnet. Der Wälzfräser 28 ist somit um die B-Achse drehantreibbar.

Seitlich an dem Ständer 8 sind eine zweite Bearbeitungseinheit 31 und eine dritte Bearbeitungseinheit 32 angeordnet. Die Bearbeitungseinheiten 31, 32 sind identisch ausgebildet, so dass nachfolgend lediglich die Bearbeitungseinheit 31 detailliert beschrieben ist. Die Bearbeitungseinheit 31 weist einen dritten z-Schlitten 33 auf, der mittels eines dritten z-Antriebsmotors 34 auf dritten z-Führungsschienen 35 parallel zu der z-Richtung linear verfahrbar ist. Die z-Führungsschienen 35 sind seitlich an dem Ständer 8 befestigt. An dem z-Schlitten 33 ist ein Zustell-Schlitten 36 angeordnet, der auf Führungsschienen 37 mittels eines Antriebsmotors 38 in einer Zustell-Richtung linear verfahrbar ist. Die Zustell-Richtung verläuft in der x-y-Ebene unter einem Winkel von ungefähr 30° bis 50° zu der y-Richtung und definiert eine lineare Zustellachse 39.

An dem Zustell-Schlitten 36 ist ein Werkzeughalter 40 angeordnet, der mittels eines Antriebsmotors 41 um eine mit der Zustellachse zusammenfallende Schwenkachse 39 um mindestens 180° verschwenkbar ist. Die Schwenkachse 39 ist also identisch mit der Zustellachse 39. Die Schwenkachse 39 schneidet die Drehachse 7.

Am freien Ende des Werkzeughalters 40 ist ein zweites Werkzeug 43 angeordnet, das mittels eines im Werkzeughalter 40 integrierten Antriebsmotors 44 um eine parallel zu der z-Richtung verlaufende Drehachse 45 drehantreibbar ist. Entsprechend weist die dritte Bearbeitungseinheit 32 ein um eine Schwenkachse 42 verschwenkbares drittes Werkzeug 46 auf, das um eine zugehörige Drehachse 47 drehantreibbar ist.

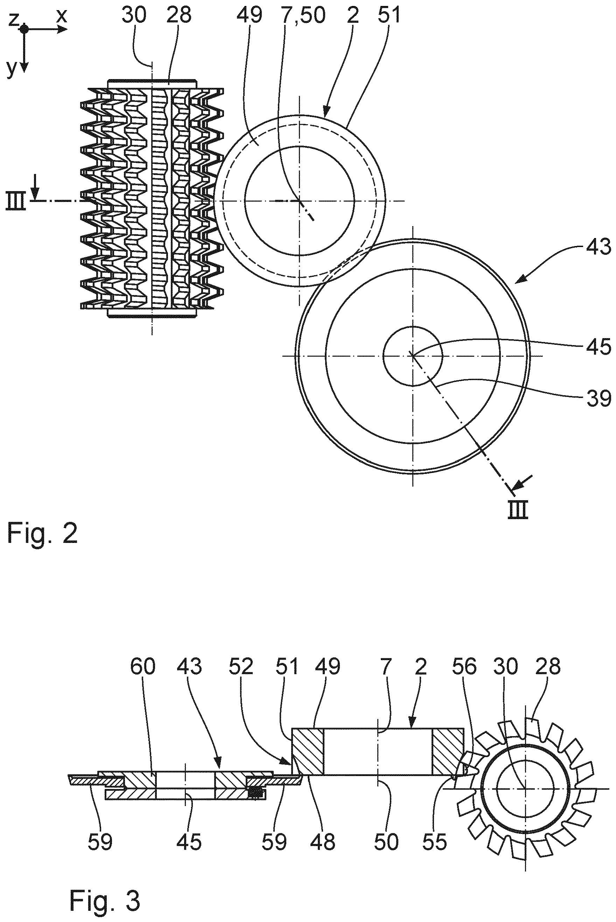

Nachfolgend ist anhand der Figuren 2 bis 12 das Verfahren zur Herstellung einer Verzahnung an dem Werkstück 2 beschrieben. Aus Gründen der Übersichtlichkeit ist in den Figuren lediglich das Werkstück 2 und die mit dem Werkstück 2 jeweils in Eingriff befindlichen Werkzeuge 28, 43 und/oder 46 dargestellt.

Das Werkstück 2 weist eine erste Stirnseite 48 und eine gegenüberliegende zweite Stirnseite 49 auf, die quer bzw. senkrecht zu einer Mittellängsachse 50 des Werkstücks 2 verlaufen. Zwischen den Stirnseiten 48, 49 weist das Werkstück 2 eine ringförmig um die Mittellängsachse 50 und parallel zu der Mittellängsachse 50 verlaufende Umfangsseite 51 auf. An der Umfangsseite 51 soll eine Verzahnung 52 mit Zähnen 53 und Zahnlücken 54 hergestellt werden.

Das noch unbearbeitete Werkstück 2 wird zunächst in der Werkstückaufnahme 5 gespannt und um die Drehachse 7 drehangetrieben. Im gespannten Zustand des Werkstücks 2 fällt die Drehachse 7 mit der Mittellängsachse 50 zusammen. Anschließend wird der Wälzfräser 28 um die Drehachse 30 drehangetrieben und derart zu dem Werkstück 2 zugestellt, dass ausgehend von der ersten Stirnseite 48 an der Umfangsseite 51 die Verzahnung 52 erzeugt wird. Der Wälzfräser 28 wird zum Erzeugen der Verzahnung 52 in der z-Richtung verfahren.

Nach dem Anschnitt des Wälzfräsers 28 werden beim Erzeugen der Verzahnung 52 axiale Grob- bzw. Primär-Grate 55 und radiale Grob- bzw. Primär-Grate 56 erzeugt. Die axialen Grob-Grate 55 treten an der ersten Stirnseite 48 auf, wohingegen die radialen Grob-Grate 56 an der Umfangsseite 51 auftreten, insbesondere an den Zahnspitzen 57 und teilweise auch an den Zahnflanken 58 der Zähne 53 auftreten. Die Grob-Grate 55, 56 sind in Fig. 3 angedeutet.

Nachdem die Verzahnung 52 im Bereich der ersten Stirnseite 48 ausgebildet ist, wird zum Entfernen der axialen Grob-Grate 55 das zweite Werkzeug 43 zu dem Werkstück 2 zugestellt und um die Drehachse 45 drehangetrieben. Dieser Bearbeitungszustand ist in den Figuren 2 und 3 veranschaulicht. Das Werkzeug 43 ist als Entgrat-Werkzeug ausgebildet und weist mehrere Schneiden 59 auf, die in üblicher Weise an einem scheibenförmigen Grundkörper 60 angeordnet sind. Das Entgrat-Werkzeug 43 wird um die Drehachse 45 drehangetrieben und so die axialen Grob-Grate 55 mittels der Schneiden 59 von der ersten Stirnseite 48 entfernt. Alternativ kann das Entgrat-Werkzeug 43 lediglich eine Schneide 59 aufweisen. Dieses Entgrat-Werkzeug 43 muss beim Entgraten nicht drehangetrieben werden, sondern kann zum Entgraten von dem drehangetriebenen Werkstück 2 lediglich mitgeschleppt werden. Das Entfernen der axialen Grob-Grate 55 erfolgt zeitlich parallel zur weiteren Erzeugung der Verzahnung 52 mittels des Wälzfräsers 28.

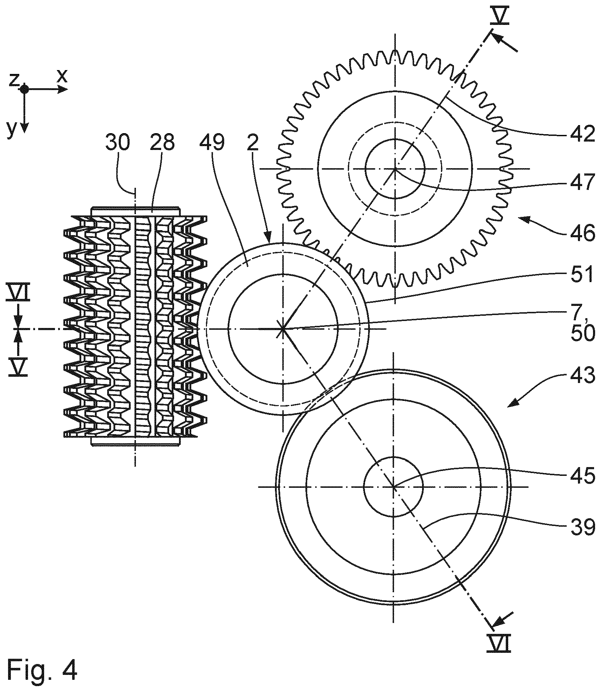

Ist die Verzahnung 52 im Bereich der ersten Stirnseite 48 ausreichend ausgebildet, wird zum Anfasen der Verzahnung 52 das als Anfas-Werkzeug ausgebildete dritte Werkzeug 46 zu dem Werkstück 2 zugestellt. Das Anfas-Werkzeug 46 weist mehrere Anfas-Elemente 61 auf, die an einem scheibenförmigen Grundkörper 62 angeordnet sind. Zum Anfasen der Zähne 53 im Bereich der ersten Stirnseite 48 wird das Anfas-Werkzeug 46 um die zugehörige Drehachse 47 drehangetrieben. Beim Anfasen werden die radialen Grob-Grate 56 entfernt und es entstehen axiale Fein- bzw. Sekundär-Grate 63 sowie radiale Fein- bzw. Sekundär-Grate 64. Die axialen Fein-Grate 63 treten wiederum an der ersten Stirnseite 48 auf, wohingegen die radialen Fein-Grate 64 an der Umfangsseite 51, insbesondere an den Zahnspitzen 57 und teilweise auch an den Zahnflanken 58 der Zähne 53 auftreten. Das Anfasen im Bereich der ersten Stirnseite 48 ist in den Figuren 4 bis 6 veranschaulicht. Dadurch, dass das Entgrat-Werkzeug 43 an der ersten Stirnseite 48 noch in Eingriff mit dem Werkstück 2 ist, werden die beim Anfasen entstandenen axialen Fein-Grate 63 noch während des Anfasens entfernt.

Das Nachbearbeiten der erzeugten Verzahnung 52 im Bereich der ersten Stirnseite 48 umfasst dementsprechend das Entfernen von axialen Grob- und Fein-Graten 55, 63 sowie das Entfernen von radialen Grob-Graten 56, die beim Erzeugen der Verzahnung 52 und beim Anfasen der Verzahnung 52 entstanden sind. Das Nachbearbeiten findet zeitlich parallel bzw. zeitgleich zum weiteren Erzeugen der Verzahnung 52 mittels des Wälzfräsers 28 statt.

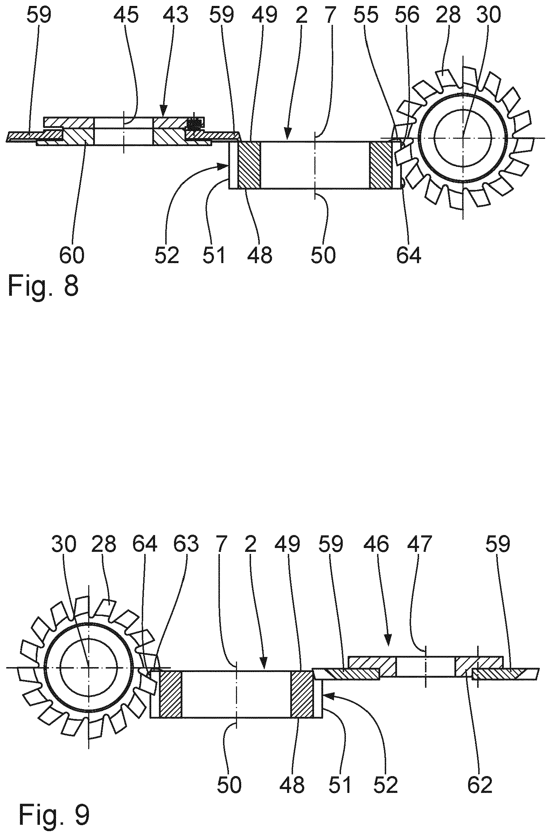

Der Wälzfräser 28 wird zur Erzeugung der Verzahnung 52 an der gesamten Umfangsseite 51 fortwährend in z-Richtung verfahren, bis die Verzahnung 52 auch im Bereich der zweiten Stirnseite 49 erzeugt wird. Hierbei entstehen wiederum axiale Grob-Grate 55 an der zweiten Stirnseite 49 und radiale Grob-Grate 56 an der Umfangsseite 51. Dies ist in Fig. 8 veranschaulicht.

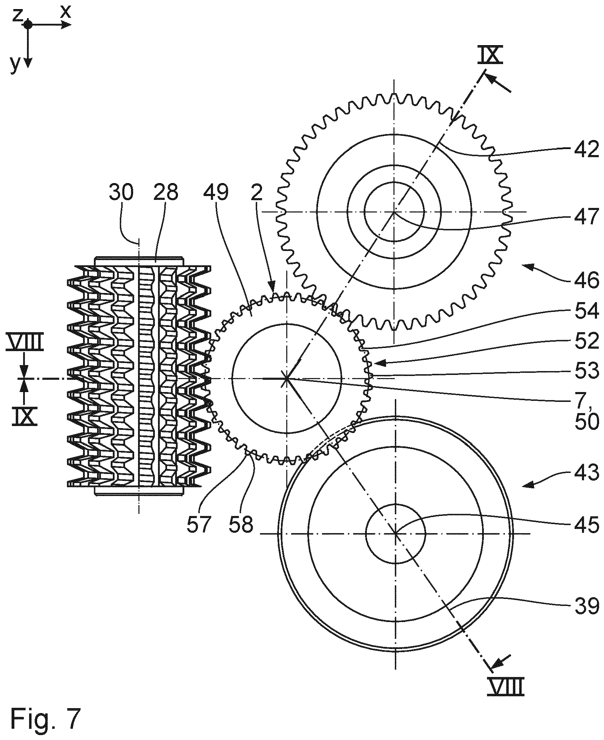

Nachdem die Verzahnung 52 an der ersten Stirnseite 48 angefast und entgratet wurde, werden das Entgrat-Werkzeug 43 und das Anfas-Werkzeug 46 von dem Werkstück 2 entfernt, um 180° um ihre jeweilige Schwenkachse 39, 42 verschwenkt und in z-Richtung linear zu der zweiten Stirnseite 49 verfahren. Zwischenzeitlich wurde die Verzahnung 52 mittels des Wälzfräsers 28 auch im Bereich der zweiten Stirnseite 49 vollständig erzeugt. Das Entgrat-Werkzeug 43 und das Anfas-Werkzeug 46 werden nun wieder zu dem Werkstück 2 zugestellt, so dass mittels des Entgrat-Werkzeugs 43 axiale Grob- und Fein-Grate 55, 63 und mittels des Anfas-Werkzeuges 46 während des Anfasens radiale Grob-Grate 56 in der bereits beschriebenen Weise entfernt werden. Das Anfasen und Entgraten findet wiederum zeitlich parallel, also zumindest teilweise zeitgleich statt. Das Entgraten an der zweiten Stirnseite 49 und das Anfasen der Verzahnung 52 sowie das Entfernen von radialen Grob-Graten 56 im Bereich der zweiten Stirnseite 49 ist in den Figuren 7 bis 9 veranschaulicht.

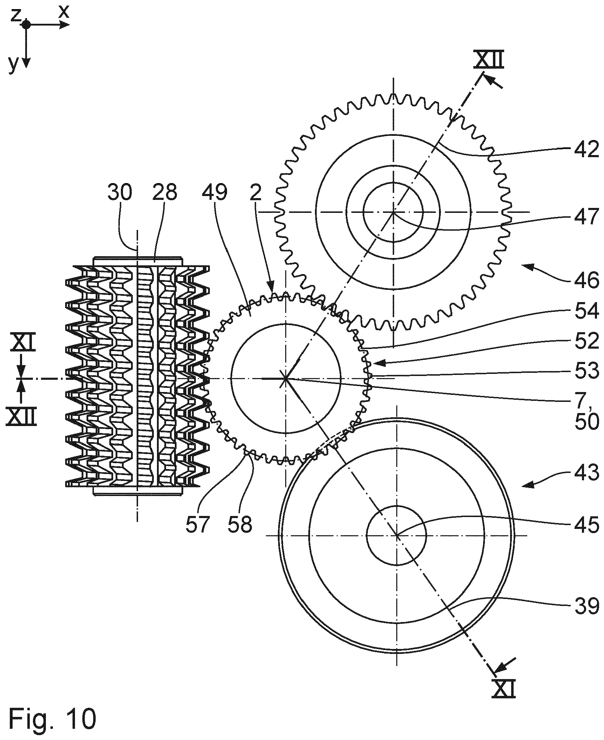

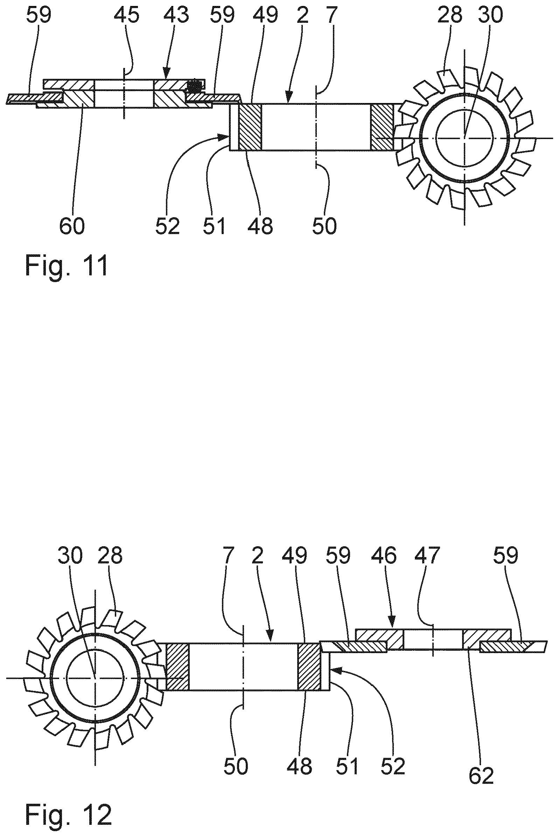

Die nach dem Anfasen und Entfernen der axialen Grate 55, 63 noch verbleibenden radialen Fein-Grate 64 werden durch Fertigbearbeiten der erzeugten Verzahnung 52 entfernt. Das Fertigbearbeiten erfolgt mittels des Wälzfräsers 28 und wird als Schlichtschnitt bezeichnet. Nachdem die Verzahnung 52 im Bereich der zweiten Stirnseite 49 fertig erzeugt wurde, wird die lineare Verfahrrichtung des Wälzfräsers 28 geändert. Der Wälzfräser 28 wird nun parallel zu der z-Richtung ausgehend von der zweiten Stirnseite 49 wieder in Richtung der ersten Stirnseite 48 linear verfahren. Hierbei werden die radialen Fein-Grate 64 im Bereich der zweiten Stirnseite 49 und der ersten Stirnseite 48 entfernt. Alternativ kann das Fertigbearbeiten derart erfolgen, dass der Wälzfräser 28 ausgehend von der ersten Stirnseite 48 in Richtung der zweiten Stirnseite 49 linear verfahren wird. Das Fertigbearbeiten erfolgt zeitlich parallel zu dem Nachbearbeiten der Verzahnung 52 im Bereich der zweiten Stirnseite 49 mittels des Entgrat-Werkzeugs 43 und des Anfas-Werkzeugs 46. Das Fertigbearbeiten ist in den Figuren 10 bis 12 veranschaulicht. Die Figuren 11 und 12 zeigen das fertig verzahnte, angefaste und entgratete Werkstück 2.

Durch die Ausbildung des Entgrat-Werkzeugs 43 sowie dessen Verschwenkbarkeit um die zugehörige Schwenkachse 39 ist es möglich, axiale Grate 55, 63 an der ersten Stirnseite 48 zeitlich unabhängig von axialen Graten 55, 63 an der zweiten Stirnseite 49 zu entfernen. Entsprechend ist es durch die Ausbildung des Anfas-Werkzeugs 46 sowie dessen Verschwenkbarkeit um die zugehörige Schwenkachse 42 möglich, die Verzahnung 52 im Bereich der ersten Stirnseite 48 und im Bereich der zweiten Stirnseite 49 zeitlich unabhängig anzufasen und radiale Grob-Grate 56 zu entfernen. Durch dieses unabhängige Nachbearbeiten der Verzahnung 52 ist es möglich, das Erzeugen, das Nachbearbeiten und gegebenenfalls das Fertigbearbeiten der Verzahnung 52 weitestgehend zeitlich parallel durchzuführen. Hierdurch werden geringe Zykluszeiten bei der Verzahnung von Werkstücken 2 erzielt, obwohl die Werkzeugmaschine 1 nur eine Werkstückspindel 4 aufweist und somit immer nur ein Werkstück 2 bearbeitet werden kann. Mittels des erfindungsgemäßen Verfahrens kann somit bei geringem maschinentechnischem Aufwand eine hohe Produktivität bei der Verzahnung von Werkstücken 2 erzielt werden.

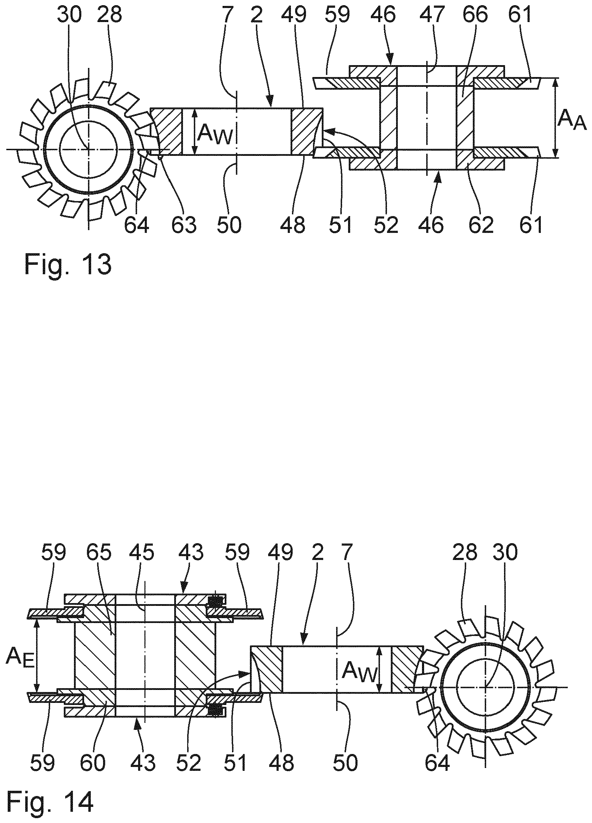

Nachfolgend ist anhand der Figuren 13 bis 16 ein zweites Ausführungsbeispiel der Erfindung beschrieben. Die Werkzeugmaschine 1 entspricht der im ersten Ausführungsbeispiel beschriebenen Werkzeugmaschine, jedoch mit dem Unterschied, dass die Werkzeuge 43, 46 nicht verschwenkbar sind und ausschließlich lineare Zustellachsen 39, 42 und keine Schwenkachsen ausgebildet sind. Die Werkzeugmaschine 1 weist somit einen vereinfachten Aufbau auf.

Zur beidseitigen Nachbearbeitung des Werkstücks 2 weist die Bearbeitungseinheit 31 zwei Entgrat-Werkzeuge 43 auf, die gegenüberliegend zueinander an einem gemeinsamen Werkzeugträger 65 angeordnet sind. Damit die erste Stirnseite 48 unabhängig von der zweiten Stirnseite 49 entgratet werden kann, weisen die Entgrat-Werkzeuge 43 in der z-Richtung einen Abstand A_{E} voneinander auf, der größer als der Abstand A_{W} der Stirnseiten 48, 49 des Werkstücks 2 ist. Entsprechend weist die Bearbeitungseinheit 32 zwei Anfas-Werkzeuge 46 auf, die gegenüberliegend zueinander an einem gemeinsamen Werkzeugträger 66 befestigt sind. Zum unabhängigen Anfasen der Verzahnung 52 im Bereich der ersten Stirnseite 48 und im Bereich der zweiten Stirnseite 49 weisen die Anfas-Werkzeuge 46 in der z-Richtung einen Abstand A_{A} voneinander auf, der größer als der Abstand A_{W} ist.

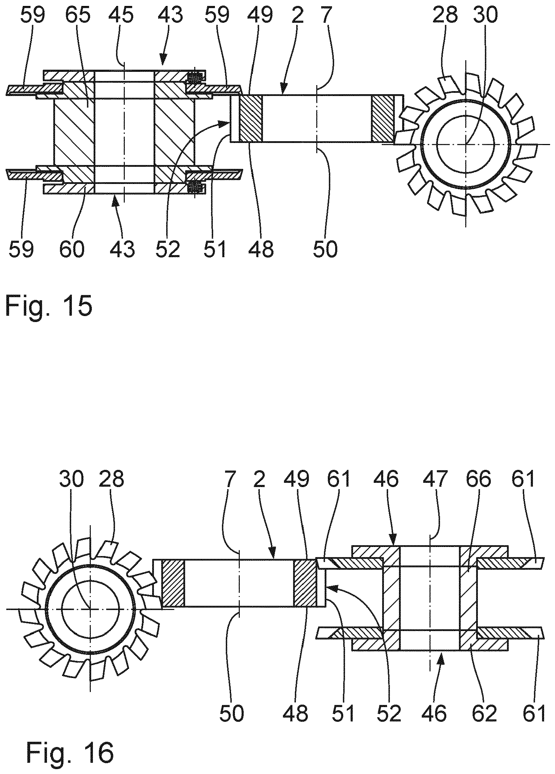

Das Erzeugen und Nachbearbeiten der Verzahnung 52 im Bereich der ersten Stirnseite 48 erfolgt in der bereits beschriebenen Weise und ist in den Figuren 13 und 14 veranschaulicht. Zum Nachbearbeiten der Verzahnung 52 im Bereich der zweiten Stirnseite 49 werden die Werkzeugträger 65, 66 zusammen mit den daran angeordneten Werkzeugen 43, 46 linear verfahren, so dass die der zweiten Stirnseite 49 zugehörigen Werkzeuge 43, 46 in Eingriff mit dem Werkstück 2 kommen. Dies ist in den Figuren 15 und 16 veranschaulicht. Hinsichtlich der weiteren Funktionsweise der Werkzeugmaschine 1 und des weiteren Verfahrensablaufs wird auf das erste Ausführungsbeispiel verwiesen.

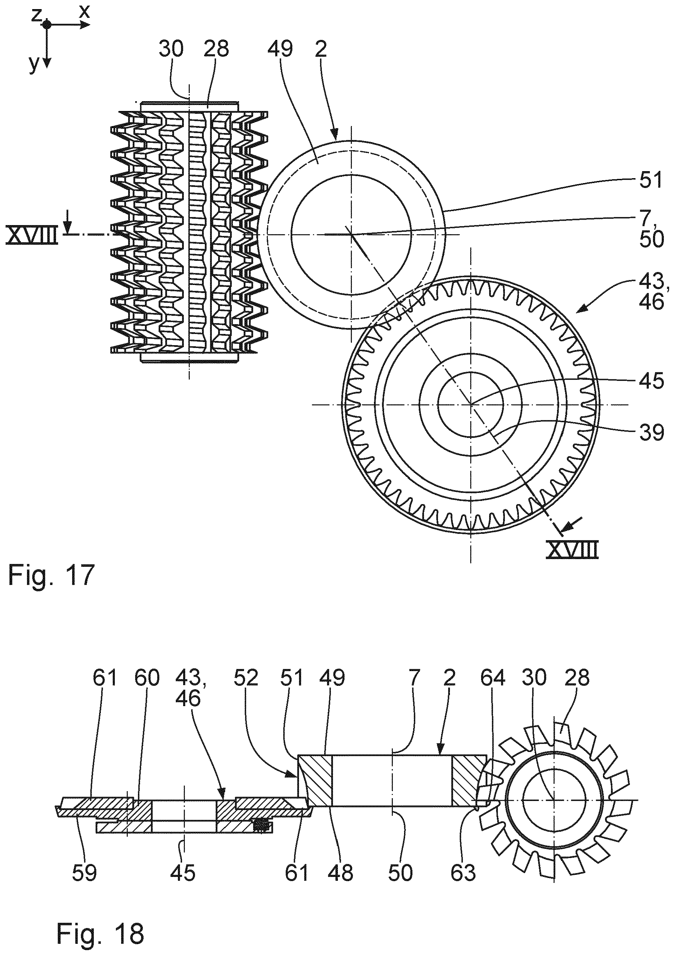

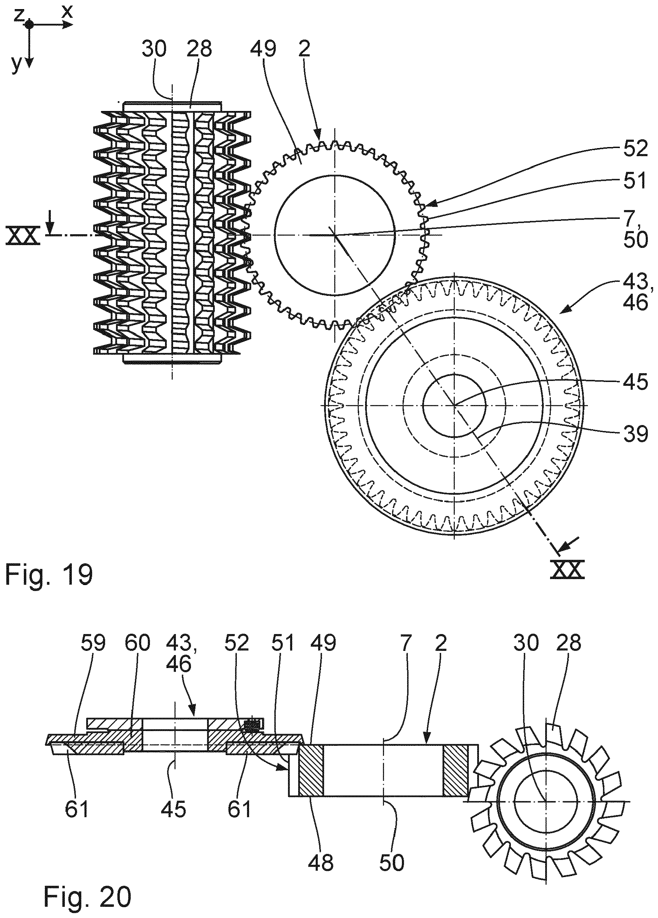

Nachfolgend ist anhand der Figuren 17 bis 20 ein drittes Ausführungsbeispiel der Erfindung beschrieben. Die Werkzeugmaschine 1 weist im Unterschied zu dem ersten Ausführungsbeispiel lediglich die Bearbeitungseinheiten 25 und 31 auf. Dadurch, dass die Bearbeitungseinheit 32 entfällt, weist die Werkzeugmaschine 1 einen einfacheren Aufbau auf. Das Entgrat-Werkzeug 43 und das Anfas-Werkzeug 46 sind zu einem Kombi-Werkzeug zusammengefasst und an einem gemeinsamen Grundkörper 60 angeordnet. Das Nachbearbeiten der im Bereich der ersten Stirnseite 48 erzeugten Verzahnung 52 erfolgt zeitlich parallel zu dem weiteren Erzeugen der Verzahnung 52 mittels des Wälzfräsers 28. Dies ist in den Figuren 17 und 18 veranschaulicht. Zum Nachbearbeiten der Verzahnung 52 im Bereich der zweiten Stirnseite 49 wird das Kombi-Werkzeug entsprechend dem ersten Ausführungsbeispiel um 180° um die Schwenkachse 39 verschwenkt. Dies ist in den Figuren 19 und 20 veranschaulicht. Hinsichtlich der weiteren Funktionsweise der Werkzeugmaschine 1 und des weiteren Verfahrensablaufs wird auf das erste Ausführungsbeispiel verwiesen.

Gemäß einem vierten Ausführungsbeispiel der Erfindung ist die Werkzeugmaschine 1 entsprechend dem dritten Ausführungsbeispiel ausgebildet, jedoch weist die Bearbeitungseinheit 31 keine Schwenkachse auf, so dass nur die Zustellachse 39 ausgebildet ist. Die Bearbeitungseinheit 31 weist zwei Kombi-Werkzeuge entsprechend dem dritten Ausführungsbeispiel auf, die an einem gemeinsamen Werkzeugträger angeordnet sind, wie dies prinzipiell bereits zu dem zweiten Ausführungsbeispiel veranschaulicht wurde. Nachdem die erzeugte Verzahnung 52 im Bereich der ersten Stirnseite 48 mit dem zugehörigen ersten Kombi-Werkzeug nachbearbeitet wurde, wird der Werkzeugträger zusammen mit den Kombi-Werkzeugen in der z-Richtung so lange linear verfahren, bis das der zweiten Stirnseite 49 zugehörige Kombi-Werkzeug mit dem Werkstück 2 in Eingriff kommt. Hinsichtlich der weiteren Funktionsweise der Werkzeugmaschine 1 und des weiteren Verfahrensablaufs wird auf das zweite und dritte Ausführungsbeispiel verwiesen.

Die Bearbeitungseinheiten 31, 32 einschließlich der Werkzeuge 43, 46 können prinzipiell beliebig ausgebildet sein, solange das Werkstück 2 im Bereich beider Stirnseiten 48, 49 unabhängig voneinander nachbearbeitet werden kann. Hierdurch ist es möglich, das Erzeugen, das Nachbearbeiten und ggf. noch das Fertigbearbeiten weitestgehend zeitlich parallel durchzuführen, so dass bei geringem maschinentechnischem Aufwand eine hohe Produktivität bei der Verzahnung von Werkstücken 2 erzielt wird. Insbesondere ist es auch möglich, das erfindungsgemäße Verfahren zur Erzeugung von mehreren Verzahnungen 52 an einem Werkstück 2 zu verwenden. Wellenförmige Werkstücke 2 können - falls erforderlich - zusätzlich in der Gegen-Werkstückaufnahme 12 gelagert werden.

## Patentansprüche

1. Verfahren zur Herstellung von Verzahnungen an Werkstücken mit folgenden Schritten:
- Bereitstellen eines zu verzahnenden Werkstückes (2), wobei das Werkstück (2)
-- eine Mittellängsachse (50),
-- eine quer zu der Mittellängsachse (50) verlaufende erste Stirnseite (48),
-- eine quer zu der Mittellängsachse (50) verlaufende zweite Stirnseite (49) und
-- eine um die Mittellängsachse (50) und zwischen den Stirnseiten (48, 49) verlaufende Umfangsseite (51) aufweist,
- Erzeugen einer Verzahnung (52) an der Umfangsseite (51) im Bereich der ersten Stirnseite (48) mittels eines ersten Werkzeuges (28),
- Nachbearbeiten der im Bereich der ersten Stirnseite (48) erzeugten Verzahnung (52) zum Entfernen von beim Erzeugen der Verzahnung (52) entstandenen Graten (55, 56) mittels mindestens eines zweiten Werkzeuges (43, 46), wobei
-- das Nachbearbeiten zumindest an der Umfangsseite (51) der erzeugten Verzahnung (52) erfolgt und
-- das Nachbearbeiten während des weiteren Erzeugens der Verzahnung (52) erfolgt,
- Erzeugen der Verzahnung (52) im Bereich der zweiten Stirnseite (49) mittels des ersten Werkzeuges (28), und
- Nachbearbeiten der im Bereich der zweiten Stirnseite (49) erzeugten Verzahnung (52) zum Entfernen von beim Erzeugen der Verzahnung (52) entstandenen Graten (55, 56) mittels des mindestens einen zweiten Werkzeuges (43, 46),
**dadurch gekennzeichnet,**
**dass** das Nachbearbeiten der im Bereich der ersten Stirnseite (48) erzeugten Verzahnung (52) folgende Schritte umfasst:
- Anfasen der erzeugten Verzahnung (52) mittels eines Anfas-Werkzeuges (46) und Entfernen von radialen Grob-Graten (56) beim Anfasen, und
- Entfernen von axialen Graten (55, 63) an der ersten Stirnseite (48) mittels eines Entgrat-Werkzeuges (43), und
**dass** das Anfasen der erzeugten Verzahnung (52) und das Entfernen der axialen Grate (55, 63) zumindest teilweise zeitgleich erfolgt.

2. Verfahren nach Anspruch 1, **dadurch gekennzeichnet, dass** beim Nachbearbeiten radiale Grate (56) an der Umfangsseite (51) entfernt werden und das Entfernen der radialen Grate (56) im Bereich der ersten Stirnseite (48) zeitlich unabhängig von dem Entfernen der radialen Grate (56) im Bereich der zweiten Stirnseite (49) erfolgt.

3. Verfahren nach Anspruch 1 oder 2, **dadurch gekennzeichnet, dass** beim Nachbearbeiten axiale Grate (55) an den Stirnseiten (48, 49) entfernt werden und das Entfernen der axialen Grate (55) an der ersten Stirnseite (48) zeitlich unabhängig von dem Entfernen der axialen Grate (55) an der zweiten Stirnseite (49) erfolgt.

4. Verfahren nach einem der Ansprüche 1 bis 3, **dadurch gekennzeichnet, dass** das Nachbearbeiten der im Bereich der zweiten Stirnseite (49) erzeugten Verzahnung (52) folgende Schritte umfasst:
- Anfasen der erzeugten Verzahnung (52) mittels eines Anfas-Werkzeuges (46) und Entfernen von radialen Grob-Graten (56) beim Anfasen, und
- Entfernen von axialen Graten (55, 63) an der zweiten Stirnseite (49) mittels eines Entgrat-Werkzeuges (43).

5. Verfahren nach Anspruch 4, **dadurch gekennzeichnet, dass** das Anfasen der erzeugten Verzahnung (53) und das Entfernen der axialen Grate (55, 63) zumindest teilweise zeitgleich erfolgt.

6. Verfahren nach einem der Ansprüche 1 bis 5, **gekennzeichnet durch** ein Fertigbearbeiten der erzeugten Verzahnung (52) zum Entfernen von nach dem Nachbearbeiten noch verbliebenen Graten (64).

7. Verfahren nach Anspruch 6, **dadurch gekennzeichnet, dass** das Fertigbearbeiten während des Nachbearbeitens der im Bereich der zweiten Stirnseite (49) erzeugten Verzahnung (52) erfolgt.

8. Verfahren nach Anspruch 6 oder 7, **dadurch gekennzeichnet, dass** beim Fertigbearbeiten durch das Anfasen entstandene radiale Fein-Grate (64) mittels des ersten Werkzeuges (28) entfernt werden.

9. Verfahren nach einem der Ansprüche 1 bis 8, **dadurch gekennzeichnet, dass** das erste Werkzeug (28) als Fräs-Werkzeug ausgebildet ist.

10. Verfahren nach einem der Ansprüche 1 bis 9, **dadurch gekennzeichnet, dass** ein Entgrat-Werkzeug (43) vorgesehen ist, das zum Entfernen von axialen Graten (55, 63) an beiden Stirnseiten (48, 49) um eine zugehörige Schwenkachse (39) um mindestens 180° verschwenkbar ist.

11. Verfahren nach einem der Ansprüche 1 bis 10, **dadurch gekennzeichnet, dass** ein Anfas-Werkzeug (46) vorgesehen ist, das zum Anfasen der erzeugten Verzahnung (52) im Bereich beider Stirnseiten (48, 49) um eine zugehörige Schwenkachse (42) um mindestens 180° verschwenkbar ist.

12. Verfahren nach einem der Ansprüche 1 bis 11, **dadurch gekennzeichnet, dass** zum Entfernen von axialen Graten (55, 63) an den Stirnseiten (48, 49) zwei Entgrat-Werkzeuge (43) an einem gemeinsamen Werkzeugträger (65) angeordnet sind und ein axialer Abstand (A_{E}) der Entgrat-Werkzeuge (43) größer als ein axialer Abstand (A_{W}) der Stirnseiten (48, 49) ist.

13. Verfahren nach einem der Ansprüche 1 bis 12, **dadurch gekennzeichnet, dass** zum Anfasen der erzeugten Verzahnung (52) zwei Anfas-Werkzeuge (46) an einem gemeinsamen Werkzeugträger (66) angeordnet sind und ein axialer Abstand (A_{A}) der Anfas-Werkzeuge (46) größer als ein axialer Abstand (A_{W}) der Stirnseiten (48, 49) ist.

## Claims

1. Method for producing toothed sections on workpieces having the following steps:
- providing a workpiece (2) to be toothed, wherein the workpiece (2) has
-- a centre longitudinal axis (50),
-- a first end face (48) running transverse to the centre longitudinal axis (50),
-- a second end face (49) running transverse to the centre longitudinal axis (50) and
-- a peripheral face (51) running about the centre longitudinal axis (50) and between the end faces (48, 49),
- producing a toothed section (52) on the peripheral face (51) in the region of the first end face (48) by means of a first tool (28),
- reworking the toothed section (52) produced in the region of the first end face (48) to remove burrs (55, 56) produced during the production of the toothed section (52) by means of at least one second tool (43, 46), wherein
-- the reworking takes place at least on the peripheral face (51) of the toothed section (52) produced and
-- the reworking takes place during the further production of the toothed section (52),
- producing the toothed section (52) in the region of the second end face (49) by means of the first tool (28) and
- reworking the toothed section (52) produced in the region of the second end face (49) to remove burrs (55, 56) produced during the production of the toothed section (52) by means of the at least one second tool (43, 46),
**characterized in**
**that** the reworking of the toothed section (52) produced in the region of the first end face (48) comprises the following steps:
- chamfering the produced toothed section (52) by means of a chamfering tool (46) and removing radial rough burrs (56) during chamfering, and
- removing axial burrs (55, 63) on the first end face (48) by means of a deburring tool (43), and
**that** the chamfering of the produced toothed section (52) and the removal of the axial burrs (55, 63) take place at least partially simultaneously.

2. Method according to claim 1, **characterized in that** radial burrs (56) on the peripheral face (51) are removed during reworking and the removal of the radial burrs (56) in the region of the first end face (48) takes place independently in terms of time from the removal of the radial burrs (56) in the region of the second end face (49).

3. Method according to claim 1 or 2, **characterized in that** axial burrs (55) on the end faces (48, 49) are removed during reworking and the removal of the axial burrs (55) on the first end face (48) takes place independently in terms of time from the removal of the axial burrs (55) on the second end face (49).

4. Method according to any one of claims 1 to 3, **characterized in that** the reworking of the toothed section (52) produced in the region of the second end face (49) comprises the following steps:
- chamfering the produced toothed section (52) by means of a chamfering tool (46) and removing radial rough burrs (56) during chamfering, and
- removing axial burrs (55, 63) on the second end face (49) by means of a deburring tool (43).

5. Method according to claim 4, **characterized in that** the chamfering of the produced toothed section (53) and the removal of the axial burrs (55, 63) take place at least partially simultaneously.

6. Method according to any one of claims 1 to 5, **characterized by** a finishing of the produced toothed section (52) to remove burrs (64) that still remain after the reworking.

7. Method according to claim 6, **characterized in that** the finishing takes place during the reworking of the toothed section (52) produced in the region of the second end face (49).

8. Method according to claim 6 or 7, **characterized in that** radial fine burrs (64) produced by the chamfering are removed by means of the first tool (28) during the finishing.

9. Method according to any one of claims 1 to 8, **characterized in that** the first tool (28) is configured as a milling tool.

10. Method according to any one of claims 1 to 9, **characterized in that** a deburring tool (43) is provided, which is pivotable about an associated pivot axis (39) by at least 180° to remove axial burrs (55, 63) on the two end faces (48, 49).

11. Method according to any one of claims 1 to 10, **characterized in that** a chamfering tool (46) is provided, which is pivotable about an associated pivot axis (42) by at least 180° to chamfer the produced toothed section (52) in the region of the two end faces (48, 49).

12. Method according to any one of claims 1 to 11, **characterized in that** to remove axial burrs (55, 63) on the end faces (48, 49), two deburring tools (43) are arranged on a common tool carrier (65) and an axial spacing (A_{E}) of the deburring tools (43) is greater than an axial spacing (A_{W}) of the end faces (48, 49).

13. Method according to any one of claims 1 to 12, **characterized in that** to chamfer the produced toothed section (52), two chamfering tools (46) are arranged on a common tool carrier (66) and an axial spacing (A_{A}) of the chamfering tools (46) is greater than an axial spacing (Aw) of the end faces (48, 49).

## Revendications

1. Procédé de fabrication de dentures sur des pièces comprenant les étapes suivantes :
- la fourniture d'une pièce (2) à endenter, dans lequel la pièce (2) comprend :
-- un axe longitudinal médian (50),
-- une première face frontale (48) s'étendant transversalement à l'axe longitudinal médian (50),
-- une deuxième face frontale (49) s'étendant transversalement à l'axe longitudinal médian (50) et
-- une face périphérique (51) s'étendant autour de l'axe longitudinal médian (50) et entre les faces frontales (48, 49),
- la production d'une denture (52) sur la face périphérique (51) dans la zone de la première face frontale (48) au moyen d'un premier outil (28),
- la rectification de la denture (52) produite dans la zone de la première face frontale (48) de manière à éliminer les bavures (55, 56) résultant de la production de la denture (52) au moyen d'au moins un deuxième outil (43, 46), dans lequel
-- la rectification est réalisée au moins sur la face périphérique (51) de la denture (52) produite et
-- la rectification est réalisée pendant la production continue de la denture (52),
- la production de la denture (52) dans la zone de la deuxième face frontale (49) au moyen du premier outil (28), et
- la rectification de la denture (52) produite dans la zone de la deuxième face frontale (49) de manière à éliminer les bavures (55, 56) résultant de la production de la denture (52) au moyen dudit au moins un deuxième outil (43, 46),
**caractérisé**
**en ce que** la rectification de la denture (52) produite dans la zone de la première face frontale (48) comporte les étapes suivantes :
- le chanfreinage de la denture (52) produite au moyen d'un outil de chanfreinage (46) et l'élimination des bavures grossières radiales (56) lors du chanfreinage, et
- l'élimination de bavures axiales (55, 63) sur la première face frontale (48) au moyen d'un outil d'ébavurage (43), et
**en ce que** le chanfreinage de la denture (52) produite et l'élimination des bavures axiales (55, 63) sont réalisés au moins en partie simultanément.

2. Procédé selon la revendication 1, **caractérisé en ce que**, lors de la rectification, les bavures radiales (56) sur la face périphérique (51) sont éliminées et l'élimination des bavures radiales (56) dans la zone de la première face frontale (48) est réalisée dans le temps indépendamment du moment de l'élimination des bavures radiales (56) dans la zone de la deuxième face frontale (49).

3. Procédé selon la revendication 1 ou 2, **caractérisé en ce que**, lors de la rectification, les bavures axiales (55) sur les faces frontales (48, 49) sont éliminées et l'élimination des bavures axiales (55) sur la première face frontale (48) est réalisée dans le temps indépendamment du moment de l'élimination des bavures axiales (55) sur la deuxième face frontale (49).

4. Procédé selon l'une quelconque des revendications 1 à 3, **caractérisé en ce que** la rectification de la denture (52) produite dans la zone de la deuxième face frontale (49) comprend les étapes suivantes :
- le chanfreinage de la denture (52) produite au moyen d'un outil de chanfreinage (46) et l'élimination de bavures grossières radiales (56) lors du chanfreinage, et
- l'élimination de bavures axiales (55, 63) sur la deuxième face frontale (49) au moyen d'un outil d'ébavurage (43).

5. Procédé selon la revendication 4, **caractérisé en ce que** le chanfreinage de la denture (53) produite et l'élimination des bavures axiales (55, 63) sont réalisés au moins en partie simultanément.

6. Procédé selon l'une quelconque des revendications 1 à 5, **caractérisé par** une finition de la denture (52) produite pour l'élimination de bavures (64) encore restantes après la rectification.

7. Procédé selon la revendication 6, **caractérisé en ce que** la finition est réalisée pendant la rectification de la denture (52) produite dans la zone de la deuxième face frontale (49).

8. Procédé selon la revendication 6 ou 7, **caractérisé en ce que**, lors de la finition, les bavures fines radiales (64) résultant du chanfreinage sont éliminées au moyen du premier outil (28).

9. Procédé selon l'une quelconque des revendications 1 à 8, **caractérisé en ce que** le premier outil (28) est réalisé sous la forme d'un outil de fraisage.

10. Procédé selon l'une quelconque des revendications 1 à 9, **caractérisé en ce qu'**un outil d'ébavurage (43) est prévu, lequel, pour ébavurer les bavures axiales (55, 63) sur les deux faces frontales (48, 49), peut être amené à pivoter d'au moins 180° autour d'un axe de pivotement (39) associé.

11. Procédé selon l'une quelconque des revendications 1 à 10, **caractérisé en ce qu'**un outil de chanfreinage (46) est prévu, lequel, pour chanfreiner la denture (52) produite dans la zone des deux faces frontales (48, 49), peut pivoter d'au moins 180° autour d'un axe de pivotement (42) associé.

12. Procédé selon l'une quelconque des revendications 1 à 11, **caractérisé en ce que**, pour éliminer les bavures axiales (55, 63) sur les faces frontales (48, 49), deux outils d'ébavurage (43) sont agencés sur un porte-outil (65) commun et un écart axial (A_{E}) entre les outils d'ébavurage (43) est supérieur à un écart axial (A_{W}) entre les faces frontales (48, 49).

13. Procédé selon l'une quelconque des revendications 1 à 12, **caractérisé en ce que**, pour le chanfreinage de la denture (52) produite, deux outils de chanfreinage (46) sont agencés sur un porte-outil (66) commun et un écart axial (A_{A}) entre les outils de chanfreinage (46) est supérieur à un écart axial (A_{W}) entre les faces frontales (48, 49).
